(19) Europäisches Patentamt
European Patent Office
Office européen des brevets

(11) **EP 1 997 266 B1**

(12) **FASCICULE DE BREVET EUROPEEN**

(45) Date de publication et mention
de la délivrance du brevet:
**13.05.2015 Bulletin 2015/20**

(51) Int Cl.:
***H04L 9/08*** *(2006.01)* ***H04N 7/167*** *(2011.01)*
***H04N 21/266*** *(2011.01)*

(21) Numéro de dépôt: **07726551.0**

(22) Date de dépôt: **28.02.2007**

(86) Numéro de dépôt international:
**PCT/EP2007/051915**

(87) Numéro de publication internationale:
**WO 2007/099128 (07.09.2007 Gazette 2007/36)**

(54) **PROCEDE POUR GERER ET CONTROLER LES CLES D'ACCES A DES SERVICES DANS UN SYSTEME DE COMMUNICATION**

VERFAHREN ZUM VERWALTEN UND KONTROLLIEREN DER ZUGRIFFSSCHLÜSSEL ZU DIENSTEN IN EINEM KOMMUNIKATIONSSYSTEM

METHOD FOR MANAGING AND CONTROLLING THE ACCESS KEYS TO SERVICES IN A COMMUNICATION SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.02.2006 FR 0601773**

(43) Date de publication de la demande:
**03.12.2008 Bulletin 2008/49**

(73) Titulaire: **THALES**
**92200 Neuilly sur Seine (FR)**

(72) Inventeurs:
• **GARRIDO, Eric**
**F-95230 Soisy/Montmorency (FR)**
• **AGAGLIATE, Sandrine**
**F-75001 Paris (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A1- 2 831 365 US-A1- 2005 063 546**

## Description

La présente invention concerne un procédé et un système de gestion des clés permettant à un utilisateur d'accéder à un service donné, l'utilisateur pouvant ne pas être connecté en continu à ce service.

Elle s'applique, par exemple, à un système de radio communication où les récepteurs autorisés partagent une même clé de trafic.

Elle peut aussi être utilisée dans un système de navigation satellite où les récepteurs ou utilisateurs autorisés partagent une clé permettant l'accès aux signaux « secrets » diffusés dans l'espace.

Dans les systèmes pré-mentionnés, les utilisateurs d'un même service S partagent une clé commune donnant l'accès à ce service. Cette clé de trafic doit être renouvelée périodiquement pour assurer la sécurité du système.

Un centre de gestion est capable de diffuser une nouvelle valeur de clé de trafic enfouie dans le service S lui-même, en utilisant une bande passante limitée.

La gestion de clé pour les clés de trafic demande la résolution du compromis suivant :

- périodiquement, session après session, la clé doit être changée et l'accès au service doit être contrôlé,
- l'accès au service doit être rendu le plus transparent possible pour des utilisateurs autorisés qui peuvent, ne pas être toujours connectés au service.

Le but principal de cette fonction dénommée OTAR (abrégé anglo-saxon de « Over The Air Rekeying ») est de fournir aux utilisateurs autorisés un accès transparent au service. Pour un utilisateur donné, l'accès est d'autant plus transparent :

- qu'il est capable de conserver la connaissance des clés de trafic futures en évitant l'utilisation d'autres moyens de distribution que le service S lui-même, telle qu'une distribution manuelle hors ligne des clés par exemple ;
- qu'il peut quelquefois être déconnecté et, en conséquence, perdre plusieurs messages diffusés par la fonction OTAR.

Le brevet FR 2 831 365 divulgue un procédé de contrôle d'accès à un réseau.

La demande de brevet US 2005/0063546 concerne un procédé de génération de clé.

L'invention concerne un procédé de gestion des clés selon la revendication 1.

Une fonction dite à sens unique est définie, dans la présente invention, comme étant une fonction pour laquelle il n'est pas possible actuellement et par des moyens de calcul d'obtenir la fonction inverse et ledit procédé comporte vers la fin de la période de validité de la chaîne en cours pour la clé de trafic, les récepteurs ou utilisateurs ayant un niveau de confiance d pour une première période et un niveau de confiance d* pour une deuxième période mémorisent deux types de clés de trafic :

- Une clé de trafic courante K(t+d) permettant l'accès pour les derniers jours sous le contrôle de la chaîne en cours K(), avec le niveau de confiance d,

- Une seconde clé de trafic K*(t+d*) permettant l'accès pour les jours futurs sous le contrôle d'une nouvelle chaîne K*() avec un niveau de confiance d* qui peut être différent du niveau de confiance d.

Plus précisément, si la période de transition entre la chaîne K() et la chaîne K*() est constituée de r jours consécutifs du jour [T0] au jour [T0+r-1 inclus, alors pour chaque groupe d'utilisateurs G de niveau de confiance d pour la chaîne K() et d* pour la chaîne K*(), une fonction OTAR associée au groupe G peut par exemple diffuser les informations suivantes :

- Avant la période de transition :

  ○ K(t+d) chaque jour [t] avec t<T0 ,afin de donner un accès potentiel au service pendant la fenêtre temporelle glissante [t, t+d],

- Pendant la période de transition :

  ○ K(t') chaque jour [t] avec T0 <= t <T0+r, où t' est le minimum entre (t+d) et (T0+r-1), de façon à conserver un accès au service jusqu'au dernier jour [T0+r-1 de l'activation de la chaîne K(),
  ○ K*(t+d*) pour chaque jour [t] avec T0 +m <= t < T0+r, où m est le maximum entre 0 et (r-d*), afin de donner une clé d'accès future valable de la nouvelle chaîne k*(),
  ○ d, si le nouveau niveau de confiance d* est différent de l'ancien niveau d,
  ○ la date [T0+r] de l'activation de la nouvelle chaîne K*(),

- après la période de transition :

  ○ K*(t+d*) pour chaque jour [t] avec T0+r <=t

(afin de donner un accès potentiel au service pendant la fenêtre temporelle glissante [t,t+d*]).

La fonction f est, par exemple, une fonction cryptographique ou une fonction basée sur des fonctions de hachage.

L'invention concerne aussi un système de gestion des clés permettant à un utilisateur d'accéder à un ou plusieurs services S donnés dans un système de communication, l'utilisateur pouvant ne pas être connecté en continu à ce service, comportant au moins la génération d'une clé d'accès au service S pour une période correspondant au niveau de confiance d attribué à un utilisateur ou à un groupe d'utilisateur comportant en combinaison au moins les éléments suivants : un centre de gestion adapté à générer des clés en mettant en oeuvre les étapes du procédé décrit ci-dessus.

La présente invention permet, pour un service dont l'accès est contrôlé par une clé de trafic renouvelée régulièrement, tous les jours par exemple, de donner un accès transparent au service à des récepteurs pouvant être éteints jusqu'à d jours, où d correspond au niveau de confiance qui leur est attribué.

D'autres caractéristiques et avantages de la présente invention apparaîtront mieux à la lecture de la description qui suit d'un exemple de réalisation donné à titre illustratif et nullement limitatif annexé des figures qui représentent :

- La figure 1 un schéma de système comprenant un satellite et plusieurs groupes d'utilisateurs,
- La figure 2 un schéma de la procédure d'accès courante, et
- La figure 3 un schéma du renouvellement de la clé d'accès.

Afin de mieux faire comprendre l'objet de l'invention, la description qui suit est donnée pour un système de communication par satellite 1 dans lequel les utilisateurs ou les groupes d'utilisateurs autorisés à accéder à un service S, partagent une clé d'accès K, (la clé d'accès à S est enfouie dans le service). Le système comprend notamment un centre de gestion des clés 2.

On choisit, à titre d'exemple, une période de validité pour la clé de trafic à un jour, mais elle pourrait s'étaler sur une période quelconque. Si la période de validité est T alors, pour appliquer le principe selon l'invention, le mot « jour » dans la description doit être remplacé par l'expression « période de validité de la clé » ou « T-période ».

Schéma de calcul des clés de trafic « one way backward »

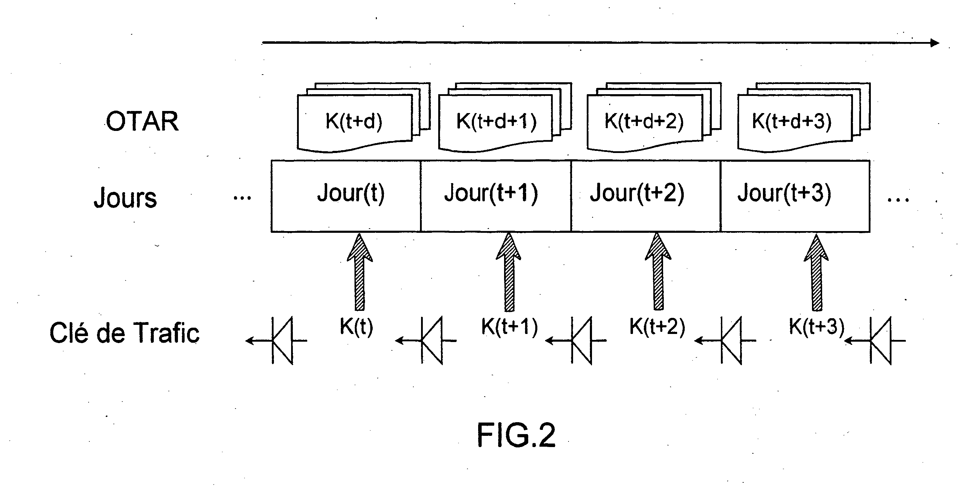

La figure 2 schématise la manière dont le centre de gestion des clés renouvelle la clé de trafic K et la diffuse aux utilisateurs (ou récepteurs).

En parcourant la figure 2 on a schématisé du haut vers le bas, la fonction OTAR transmettant chaque jour, en continu, une clé d'accès future vers les utilisateurs autorisés à accéder à un service S donné. Une ligne mentionne les jours, une ligne schématise la clé d'accès K(t) du jour t. Sur cette dernière ligne on a représenté, par des diodes, la fonction à sens unique permettant de calculer la clé du jour K(t) à partir de la clé du lendemain K(t+1), sans que le calcul inverse ne soit possible.

La clé K est renouvelée chaque jour. La clé courante et active pour le jour t est notée K(t).

Afin de conserver un rafraîchissement de la clé de trafic simple opérationnellement pour un récepteur autorisé autonome, l'idée mise en oeuvre par le procédé selon l'invention consiste, notamment, à dériver les clés de trafic successives à partir d'un paramètre secret unique.

Ceci est obtenu, par exemple, en faisant appel au schéma décrit à la figure 2.

Le principe général repose notamment sur les 2 règles suivantes :

Règle N°1 : caractéristique retour en arrière ou « backward »
La clé K(t), pour le jour [t], est déterminée à partir de la clé K(t+1) correspondant au jour [t+1] postérieur au jour [t]

$$K(t) = K\_DERIVE(K(t+1)).$$

Règle N°2 caractéristique sens unique ou "One way "

La fonction de dérivation f = K_DERIVE est une fonction à sens unique, c'est-à-dire qu'il est facile de calculer y=f(x) à partir de x, mais il est impossible de récupérer, par calcul, une entrée x vérifiant y=f(x) pour toute image y donnée.

La fonction f peut être une fonction cryptographique, comme par exemple, une fonction de chiffrement ou une fonction basée sur des fonctions de hachage.

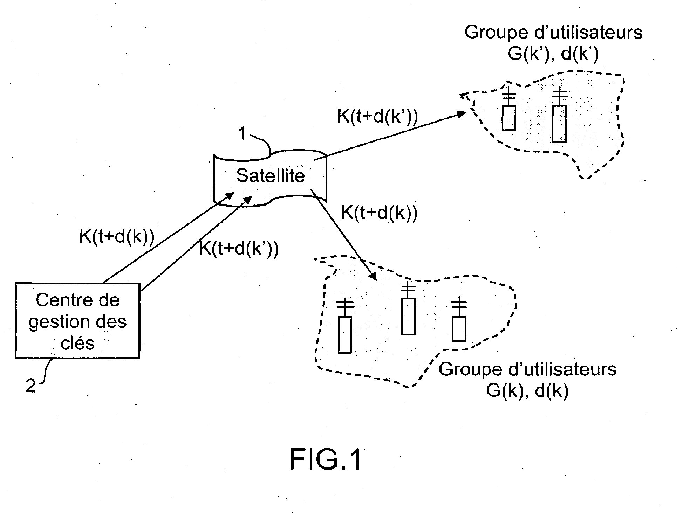

Les diodes schématisées sur la figure 1 traduisent ces deux caractéristiques « backward » et « one way ».

Le centre de gestion du système, en charge de gérer les clés, utilise ce schéma pour déterminer une chaîne complète de clés de trafic pour une période donnée : $K(t_0)$, $K(t_0+1)$, ..., $K(t_0+365)$, ..., $K(t_{fin})$ pouvant recouvrir une période de temps d'une année ou plus.

Une nouvelle chaîne est déterminée, par exemple une fois par an, par le centre de gestion en utilisant une clé racine correspondant à la dernière clé de trafic de la chaîne $K(t_{fin})$ et de toutes les autres clés de trafic déterminées à partir de $K(t_{fin})$ pour la période de temps $t_0 \le t \le t_{fin}$

Pour cela, on met en oeuvre la règle N°1

$$K(t_{fin} -1) = K\_DERIVE(K(t_{fin}));$$
$$K(t_{fin} -2) = K\_DERIVE(K(t_{fin} -1));$$
$$...$$
$$K(t_0) = K\_DERIVE(K(t_0+1)).$$

Au niveau du récepteur ou utilisateur, cette règle est aussi utilisée pour reconstruire des sous-ensembles de la chaîne totale.

Pendant la crypto période de la chaîne globale de clé de trafic K(.), un récepteur autorisé le jour courant [t] possède seulement une clé de trafic intermédiaire K(t+d), où d correspond au niveau de confiance attribué à un utilisateur ou récepteur.

A partir de la valeur de K(t+d), l'utilisateur calcule toutes les clés de trafic K(t+d-1), K(t+d-2),..., K(t) en appliquant la règle N°1 de manière itérative.

Cette sous-chaîne lui donne un accès potentiel aux services auxquels il est autorisé pour une période temporelle limitée du jour[t] au jour[t+d]. Toutefois, grâce à la propriété de la fonction de cryptographie utilisée (règle 2 annoncée ci-avant), il ne peut déduire les clés du trafic futures K(t+d+1), K(t+d+2) correspondant aux jours [t+d+1].

Le procédé selon l'invention permet notamment de contrôler, d'une manière souple, la capacité d'accès des groupes d'utilisateurs (récepteurs) de différents « niveau de confiance a priori ».

Un utilisateur va toujours gérer une clé de trafic intermédiaire K(t+d) où, la valeur de d est sélectionnée selon le niveau de confiance a priori de l'utilisateur et assure un accès sur une fenêtre temporelle limitée [jour[t],...jour[t+d]].

Pour continuer à accéder au service après cette période d, l'utilisateur autorisé doit obtenir de nouvelles clés de trafic valides K(). Les deux moyens de distribution possibles de clés de trafic valides sont, par exemple, la fonction précitée OTAR et la distribution de clés « hors ligne ».

Fonction journalière associée à un groupe d'utilisateurs

Pour un utilisateur autorisé et possédant une clé de trafic active, une façon de maintenir sa capacité d'accès est d'utiliser la fonction OTAR offerte par le service.

Les utilisateurs ayant un même niveau de confiance forment un groupe. Opérationnellement, il est préférable que le nombre de groupes reste limité.

Une fonction spécifique OTAR est ensuite définie pour chacun de ces groupes G. Les messages correspondant à cette fonction OTAR sont spécifiques et différents pour chaque groupe.

1) le message OTAR d'un groupe G(k) est chiffré au niveau applicatif avec un schéma de diffusion ou « broadcast » spécifique appelé BES (Broadcast Encryption Scheme).
Un membre d'un groupe G(k) a uniquement accès à la fonction OTAR associée au groupe. Le BES est utilisé pour contrôler quels sont les utilisateurs du groupe qui ont accès à la clé de trafic future diffusée par le message délivré par la fonction OTAR au groupe.
2) Un message OTAR transmet principalement la clé future de trafic K(t+d). Cette clé est spécifique à chaque groupe, le paramètre d pouvant être différent en fonction des groupes, dépendant du niveau de confiance du groupe.
La fonction générique OTAR est effectuée jour après jour. Pendant le jour [t], la fonction transmet en continu aux membres d'un groupe particulier de niveau de confiance « d », la clé de trafic correspondante K(t+d) qui leur permet de calculer toutes les clés K(t+d) à K(t+1). Pendant le jour suivant jour[t+1], la fonction OTAR transmettra au membre du groupe la clé K(t+d+1) et ainsi de suite.

Gestion du niveau de confiance

Le paramètre d de niveau de confiance est un paramètre important qui peut être sélectionné jour après jour pour contrôler l'accès au service d'une manière souple. Une politique de sécurité permet de sélectionner le paramètre d(k) pour chaque groupe G(k) et de le modifier jour après jour en cas de risque.

La valeur courante du niveau de confiance du groupe G(k) pendant le jour jour[t] est notée d(k)[jour(t)] pour souligner le fait qu'il dépend potentiellement du groupe G(k) et du jour.

D'un point de vue opérationnel, d fixe aussi de manière explicite l'autonomie du récepteur, c'est-à-dire le délai maximum pendant lequel un récepteur peut être éteint et accéder à nouveau au service sans avoir recours à un moyen hors ligne pour obtenir une clé de trafic valide.

Un utilisateur ayant un niveau de confiance d au jour [t] va continuer d'accéder normalement au service après le jour[t+d] si, au moins une transmission de la fonction OTAR a été un succès pendant les jours consécutifs précédent jour [t], jour[t+1],....jour[t+d-1].

Dans le cas où il n'y a pas réellement de besoin de dénier un utilisateur (c'est-à-dire de lui interdire l'accès au service), d peut être sélectionné pour être grand, afin d'augmenter la probabilité d'accès transparent au service, même dans des conditions opérationnelles difficiles (par exemple une coupure d'accès au service assez longue).

En cas de risque, des politiques de gestion des « dénis » sont possibles.

En cas de risque faible, la capacité d'accès aux groupes les plus risqués peut être réduite (diminution du niveau de sécurité d à d'<d). dans ce cas, la fonction correspondante OTAR transmettra pendant le jour en cours [t] une clé caractéristique future K(t+d'), avec d'<d.

En cas de risque élevé, la fonction OTAR ne fournira plus d'informations aux groupes qui ne sont plus autorisés (d'=0).

Lorsqu'un groupe G(k) est dénié au jour[t], la fonction OTAR ne fournira pas plus d'information relative aux clés de trafic que celle qu'il avait au temps [t]. Si au début du procédé de « déni » le niveau de confiance du groupe était d(k), les utilisateurs pourront générer les clés de trafic K(t) à K(t+d(k)) et ne pourront pas générer K(u) pour u>t+d(k). Les utilisateurs auront donc accès au service encore d(k) jours après que le groupe soit dénié (temps de latence de d(k) jours mais pas plus).

En effet, la période avant que le « déni » ne soit absolument garanti est d(k) jours.

Le « déni » du groupe particulier G(k) de niveau de confiance d(k) ne change pas la condition d'accès des utilisateurs des autres groupes encore autorisés. Un utilisateur d'un autre groupe autorisé G(k') continuera à accéder normalement au service pendant le jour [t+d(k')] si au moins une transmission de la fonction OTAR a été reçue avec succès pendant les jours précédents consécutifs [t], [t+1],....[t+d(k')-1].

Cette condition est indépendante du déni du groupe G(k). Comme cette procédure de déni n'a pas de conséquence sur les groupes toujours autorisés, on parlera de procédure « souple » (en anglo-saxon soft) de déni de groupe.

Avec cette procédure de déni standard, la période avant que le déni du groupe G(k) soit effectif est de d(k) jours. Parfois, ce délai sera réduit pour des raisons de sécurité.

Si le groupe dénié a été, pour une durée importante, identifié comme un groupe à risque, son niveau de confiance alloué d(k) pourra être préventivement réduit à quelques jours ou réduit au minimum à un jour pour être certain de pouvoir dénier ce groupe dans un délai minimum de 1 jour.

Dans le cas où l'on ne réduit pas de manière préventive le niveau de confiance de ce groupe, alors il est possible de mettre en oeuvre une procédure permettant de réduire le délai de d(k) jours avant que le déni ne soit effectif.

Ce déni de groupe d'urgence est appelé « procédure brutale (en anglo-saxon « hard ») de déni de groupe. Il est possible de changer momentanément les conditions d'accès au service pour les autres groupes autorisés. Ceci est basé sur le renouvellement des chaînes de clés de trafic comme il est explicité ci-après.

Renouvellement de la chaîne de clé de trafic et déni " hard"

Dans certains cas, on peut imposer un renouvellement de chaîne des clés de trafic K() avant la fin normalement prévue, afin de réduire le délai de d(k) jours avant que le déni d'un groupe G(k) soit effectif. Ce renouvellement concerne tous les utilisateurs du service S (donc tous les groupes G(k)) puisqu'ils doivent partager une clé commune donnant accès à S. La procédure suivante s'applique à chacun des groupes. Soit G un groupe de niveau de confiance d.

Vers la fin de la période de validité de la chaîne en cours K() pour la clé de trafic K(t+d), les récepteurs ou utilisateurs vont mémoriser deux types de clés de trafic :

• Une clé de trafic courante K(t+d) permettant l'accès pour les derniers jours sous le contrôle de la chaîne en cours K(), avec le niveau de confiance d,

• Une seconde clé de trafic K*(t+d*) permettant l'accès pour les jours futurs sous le contrôle d'une nouvelle chaîne K*() avec un niveau de confiance d* qui peut être différent du niveau de confiance d.

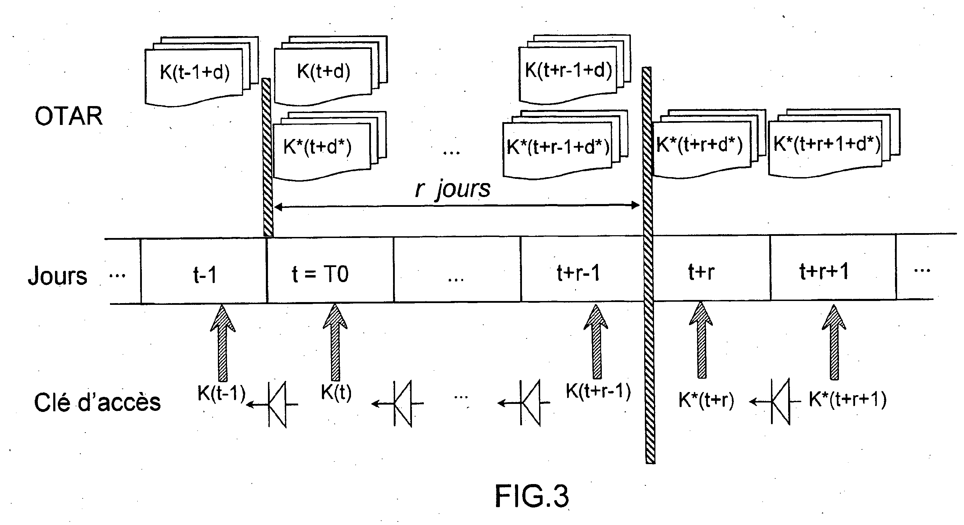

La figure 3 schématise une manière générique pour la procédure de renouvellement ou de rafraîchissement de la clé.

Pour chaque jour en cours [u],

• La ligne « clé d'accès » correspond aux clés de trafic K(u) en utilisation pour le jour[u],

• Sur la ligne « OTAR », la figure 2 précise les clés de trafic K(u') qui sont transportées sur le message journalier OTAR pendant le jour courant [u],

• r est un paramètre qui fixe la fenêtre temporelle qui est encore sous le contrôle temporel de l'ancienne clé de trafic K() mais dans laquelle la fonction courante OTAR donne les valeurs des clés de trafic futures de la nouvelle chaîne K*(),

• d (respectivement d* ) est le niveau de confiance en cours du groupe associé à la chaîne K() (respectivement K*()).

En suivant cette procédure, l'accès pour les différents groupes est momentanément piloté par le paramètre r.

1) la condition pour conserver un accès transparent (non nécessaire pour réinitialiser le service) pour les groupes encore autorisés est la suivante :

un utilisateur de niveau de confiance d doit être actif et accéder à la fonction OTAR pendant au moins un jour dans la fenêtre temporelle de r' jours consécutifs précédent la date d'activation de la chaîne K*(), où r' est le minimum entre r, d et d*, toujours sous le contrôle des anciennes clés de trafic, pour récupérer une clé de trafic valide de la chaîne K*().

2) Le déni absolu (pas de clé de trafic valide) est garanti sous la condition suivante :

Un groupe dont le déni est demandé au jour [t] et de niveau de confiance d n'a plus accès au service au jour [t+r"], où r" est le minimum entre r et d, si sa fonction correspondante OTAR pendant cette même fenêtre temporelle est inhibé.

Les paramètres r et d peuvent être modifiés jour après jour pour adapter la capacité de déni suivant le degré de risque différent, et pour gérer le rapport : [délai pour dénier un groupe risqué]/[délai pendant lequel un utilisateur peut rester inactif sans être avoir à récupérer des clés de manière manuelle].

L'information exacte diffusée dans le message OTAR dans le cas déni « hard » est le suivant :

- avant la période de transition, avant le jour [T0] :

    ◦ K(t+d) chaque jour [t] avec t<T0 ,afin de donner un accès potentiel au service pendant la fenêtre temporelle glissante [t, t+d],

- pendant la période de transition, entre jour[T0 et jour[T0+r-1]

    ◦ K(t') chaque jour [t] avec T0 <= t <T0+r, où t' est le minimum entre (t+d) et (T0+r-1), de façon à conserver un accès au service jusqu'au dernier jour [T0+r-1] de l'activation de la chaîne K(),
    ◦ K*(t+d*) pour chaque jour [t] avec T0 +m <= t < T0+r, où m est le maximum entre 0 et (r-d*), afin de donner une clé d'accès future valable de la nouvelle chaîne k*(),
    ◦ d, si le nouveau niveau de confiance d* est différent de l'ancien niveau d,
    ◦ la date [T0+r] de l'activation de la nouvelle chaîne K*(),

- après la période de transition, à partir du jour[T0+r] :

    ◦ K*(t+d*) pour chaque jour [t] avec T0+r <=t (afin de donner un accès potentiel au service pendant la fenêtre temporelle glissante [t,t+d*]).

## Revendications

**1.** Procédé de gestion des clés permettant à un utilisateur d'accéder à un ou plusieurs services S donnés dans un système de communication, l'utilisateur pouvant ne pas être connecté en continu à ce service, comportant la génération d'une clé K(t) donnant l'accès au service de jour[t] pour tous les t<$t_{fin}$ ledit procédé comportant au moins les étapes suivantes générer ladite clé en utilisant une fonction f à sens unique de la façon suivante :

    • utiliser une clé racine K($t_{fin}$) et générer la clé K($t_{fin}$-1) pour le jour [$t_{fin}$-1] antérieur au jour $t_{fin}$, en utilisant la fonction f telle que K($t_{fin}$ -1) = f(K($t_{fin}$)),
    • utiliser la nouvelle valeur de clé K($t_{fin}$-1) pour générer la clé pour le jour précédent K($t_{fin}$-2) et on réitère cette étape sur la période temporelle limitée de jour[t] au jour [t+d] afin d'obtenir la chaîne K(t+d-1), K(t+d-2).....

envoyer chaque jour t, la clé K(t+d) aux utilisateurs ou groupe d'utilisateurs ayant un niveau de confiance d, et:

    vers la fin de la période de validité de la chaîne en cours pour la clé de trafic, pour les récepteurs ou utilisateurs ayant un niveau de confiance d pour une première période et un niveau de confiance d* pour une deuxième période mémoriser deux types de clés de trafic :

    • Une clé de trafic courante K(t+d) permettant l'accès pour les derniers jours sous le contrôle de la chaîne en cours K(), avec le niveau de confiance d,
    • Une seconde clé de trafic K*(t+d*) permettant l'accès pour les jours futurs sous le contrôle d'une nouvelle chaîne K*() avec un niveau de confiance d* qui peut être différent du niveau de confiance d.

**2.** Procédé selon la revendication 1, **caractérisé en ce que**, si la période de transition entre la chaîne K() et la chaîne K*() est constituée de r jours consécutifs du jour [T0] au jour [T0+r-1] inclus, alors pour chaque groupe d'utilisateurs G de niveau de confiance d pour la chaîne K() et d* pour la chaîne K*(), une fonction OTAR associée au groupe G diffuse les informations suivantes :

    • Avant la période de transition :

        ◦ K(t+d) chaque jour [t] avec t<T0 ,afin de donner un accès potentiel au service pendant la fenêtre temporelle glissante [t, t+d],

    • Pendant la période de transition :

        ◦ K(t') chaque jour [t] avec T0 <= t <T0+r, où t' est le minimum entre (t+d) et (T0+r-1), de façon à conserver un accès au service jusqu'au dernier jour [T0+r-1] de l'activation de la chaîne K(),
        ◦ K*(t+d*) pour chaque jour [t] avec T0 +m <= t < T0+r, où m est le maximum entre 0 et (r-d*), afin de donner une clé d'accès future valable de la nouvelle chaîne k*(),
        ◦ d, si le nouveau niveau de confiance d* est différent de l'ancien niveau d,
        ◦ la date [T0+r] de l'activation de la nouvelle chaîne K*(),

    • après la période de transition :

        ◦ K*(t+d*) pour chaque jour [t] avec T0+r <=t

**3.** Procédé selon la revendication 1, **caractérisé en ce que**, si la période de transition entre la chaîne K() et la chaîne K*() est constituée de r jours consécutifs du jour [T0] au jour [T0+r-1 inclus, alors pour chaque groupe d'utilisateurs G de niveau de confiance d pour la chaîne K() et d* pour la chaîne K*(), une fonction OTAR associée au groupe G diffuse les informations suivantes :

Avant la période de transition :

 ◦ K(t+d) chaque jour [t] avec t<T0 ,afin de donner un accès potentiel au service pendant la fenêtre temporelle glissante [t, t+d],

  • Pendant la période de transition :

 ◦ K(t+d), chaque jour [t] avec T0<=t < T0+r, de façon à conserver un accès au service jusqu'au dernier jour [T0+r-1] de l'activation de la chaîne K(),

 ◦ K*(t+d*) pour chaque jour [t] avec T0<=t < T0+r, afin de donner une clé d'accès future valable de la nouvelle chaîne k*(),

 ◦ d* , si le nouveau niveau de confiance d* est différent de l'ancien niveau d,

 ◦ la date [T0+r] de l'activation de la nouvelle chaîne K*(),

  • après la période de transition :

 ◦ K*(t+d*) pour chaque jour [t] avec T0+r <=t

**4.** Procédé selon la revendication 1, **caractérisé en ce que** la fonction f est une fonction cryptographique ou une fonction basée sur des fonctions de hachage.

**5.** Système de gestion des clés permettant à un utilisateur d'accéder à un ou plusieurs services S donnés dans un système de communication, l'utilisateur pouvant ne pas être connecté en continu à ce service, comportant au moins la génération d'une clé d'accès au service S pour une période correspondant au niveau de confiance d attribué à un utilisateur ou à un groupe d'utilisateur, et en ce qu'il comporte en combinaison au moins un centre de gestion adapté à générer des clés en mettant en oeuvre les étapes d'une des revendications 1 à 4.

**Patentansprüche**

**1.** Verfahren zum Verwalten von Schlüsseln, das es einem Benutzer gestattet, auf einen oder mehrere Dienste S in einem Kommunikationssystem zuzugreifen, wobei der Benutzer nicht ständig an diesem Dienst angeschlossen zu sein braucht, umfassend die Erzeugung eines Schlüssels K(t), der Zugang zu dem Dienst an Tag[t] für alle t<t$_{fin}$ bietet, wobei das Verfahren wenigstens die folgenden Schritte beinhaltet:

 Erzeugen des Schlüssels unter Anwendung einer Funktion f in einer einzigen Richtung auf die folgende Weise:

  • Benutzen eines Root-Schlüssels K(t$_{fin}$) und Erzeugen des Schlüssels K(t$_{fin}$-1) für den Tag [t$_{fin}$-1] vor Tag t$_{fin}$ mittels der Funktion f, so dass K(t$_{fin}$-1) = f(K(t$_{fin}$)),

  • Benutzen des neuen Wertes von Schlüssel K(t$_{fin}$-1) zum Erzeugen des Schlüssels für den vorherigen Tag K(t$_{fin}$-2) und Wiederholen dieses Schrittes für die begrenzte Zeitperiode von Tag[t] bis Tag [t+d], um die Kette K(t+d-1), K(t+d-2) ... zu erhalten,

 Senden des Schlüssels K(t+d) zu den Benutzern oder zu der Benutzergruppe mit Konfidenzniveau d an jedem Tag t, und:

 Speichern, gegen Ende der Gültigkeitsperiode der laufenden Kette für den Verkehrsschlüssel, für die Empfänger oder Benutzer mit Konfidenzniveau d für eine erste Periode und Konfidenzniveau d* für eine zweite Periode, von zwei Verkehrsschlüsseltypen:

  • einem laufenden Verkehrsschlüssel K(t+d), der Zugang für die letzten Tage unter der Steuerung der laufenden Kette K() mit Konfidenzniveau d bietet,

  • einem zweiten Verkehrsschlüssel K*(t+d*), der Zugang für die zukünftigen Tage unter der Steuerung einer neuen Kette K*() und mit Konfidenzniveau d* bietet, das sich von Konfidenzniveau d unterscheiden kann.

**2.** Verfahren nach Anspruch 1, **dadurch gekennzeichnet, dass**, wenn die Übergangsperiode zwischen Kette K() und Kette K*() von r aufeinander folgenden Tagen von Tag [T0] bis Tag [T0+r-1] einschließlich gebildet wird, für jede Benutzergruppe G mit Konfidenzniveau d für die Kette K() und d* für die Kette K*() eine mit der Gruppe G assoziierte OTAR-Funktion die folgenden Informationen verteilt:

 • vor der Übergangsperiode:

 ◦ K(t+d) jeden Tag [t] mit t<T0, um potentiellen Zugang zu dem Dienst während des zeitlichen Gleitfensters [t, t+d] zu geben,

 • während der Übergangsperiode:

 ◦ K(t') jeden Tag [t] mit T0 <= t <T0+r, wobei t' das Minimum zwischen (t+d) und (T0+r-1) ist, um Zugang zu dem Dienst bis zum letzten Tag [T0+r-1] der Aktivierung der Kette K() zu konservieren,

 ◦ K*(t+d*) für jeden Tag [t] mit T0 +m <= t < T0+r, wobei m das Maximum zwischen 0 und (r-d*) ist, um einen zukünftigen gültigen Zugangsschlüssel der neuen Kette k*() zu geben,

 ○ d, wenn sich das neue Konfidenzniveau d* vom alten Niveau d unterscheidet,
 ○ das Datum [T0+r ] der Aktivierung der neuen Kette K*(),

• nach der Übergangsperiode:

 ○ K*(t+d*) für jeden Tag [t] mit T0+r <=t.

3. Verfahren nach Anspruch 1, **dadurch gekennzeichnet, dass**, wenn die Übergangsperiode zwischen der Kette K() und der Kette K*() von r aufeinander folgenden Tagen von Tag [T0] bis Tag [T0+r-1] einschließlich gebildet wird, für jede Benutzergruppe G mit Konfidenzniveau d für die Kette K() und d* für die Kette K*() eine mit der Gruppe G assoziierte OTAR-Funktion die folgenden Informationen verteilt:

• vor der Übergangsperiode:

 ○ K(t+d) jeden Tag [t] mit T<T0, um potentiellen Zugang zu dem Dienst während des zeitlichen Gleitfensters [t, t+d] zu geben,

• während der Übergangsperiode:

 ○ K(t+d) jeden Tag [t] mit T0<=t < T0+r, um Zugang zu dem Dienst bis zum letzten Tag [T0+r-1] der Aktivierung der Kette K() zu behalten,
 ○ K*(t+d*) für jeden Tag [t] mit T0<=t < T0+r, um einen zukünftigen gültigen Zugangsschlüssel der neuen Kette k*() zu geben,
 ○ d*, wenn sich das neue Konfidenzniveau d* vom alten Niveau d unterscheidet,
 ○ das Datum [T0+r ] der Aktivierung der neuen Kette K*(),

• nach der Übergangsperiode:

 ○ K*(t+d*) für jeden Tag [t] mit T0+r <=t.

4. Verfahren nach Anspruch 1, **dadurch gekennzeichnet, dass** die Funktion f eine kryptografische Funktion oder eine auf Hash-Funktionen basierende Funktion ist.

5. System zum Verwalten von Schlüsseln, das es einem Benutzer gestattet, auf einen oder mehrere Dienste S in einem Kommunikationssystem zuzugreifen, wobei der Benutzer nicht ständig an diesem Dienst angeschlossen zu sein braucht, das wenigstens das Erzeugen eines Zugangsschlüssels zu dem Dienst S für eine Periode beinhaltet, die dem einem Benutzer oder einer Benutzergruppe zugeordneten Konfidenzniveau d entspricht, und dadurch, dass es in Kombination wenigstens ein Verwaltungszentrum umfasst, das Schlüssel durch Ausführen der Schritte nach einem der Ansprüche 1 bis 4 erzeugen kann.

## Claims

1. A method for managing keys making it possible for a user to access one or more given services S in a communication system, the user who cannot be continuously connected to this service, comprising the generation of a key K(t) providing access to the service of day [t] for all the $t<t_{fin}$, said method comprising at least the following steps :

    generating said key by using a one-way function f in the following manner:

        • using a root key $K(t_{fin})$ and generating the key $K(t_{fin}-1)$ for the day $[t_{fin}-1]$ prior to the day $t_{fin}$, by using the function f such that $K(t_{fin}-1) = f(K(t_{fin}))$,
        • using the new value of key $K(t_{fin}-1)$ in order to generate the key for the previous day $K(t_{fin}-2)$ and reiterating this step over the limited time period of day [t] to day [t+d] in order to obtain the chain K(t+d-1), K(t+d-2) ...

    sending each day t, the key K(t+d) to the users or user group having a trust level d, and:

        toward the end of the period of validity of the current chain for the traffic key, for the receivers or users having a trust level d for a first period and a trust level d* for a second period storing two types of traffic keys:

            • A current traffic key K(t+d) allowing access for the last days under the control of the current chain K(), with the trust level d,
            • A second traffic key K*(t+d*) allowing access for the future days under the control of a new chain K*() with a trust level d* which may be different from the trust level d.

2. The method as claimed in claim 1, **characterized in that**, if the period of transition between the chain K() and the chain K*() is constituted of r consecutive days from day [TO] to day [T0+r-1 inclusive, then for each user group G of trust level d for the chain K() and d* for the chain K*(), a function OTAR associated with the group G broadcasts the following information:

    • before the transition period:

∘ K(t+d) each day [t] with t<T0, in order to give potential access to the service during the sliding time window [t, t+d],

• during the transition period:

∘ K(t') each day [t] with T0 <= t <T0+r, where t' is the minimum between (t+d) and (T0+r-1 ), in order to retain access to the service up to the last day [T0+r-1 of activation of the chain K(),
∘ K*(t+d*) for each day [t] with T0 +m <= t < T0+r, where m is the maximum between 0 and (r-d*), in order to give a valid future access key of the new chain k*(),
∘ d, if the new trust level d* is different from the old level d,
∘ the date [T0+r] of activation of the new chain K*(),

• after the transition period:

∘ K*(t+d*) for each day [t] with T0+r <=t.

3. The method as claimed in claim 1, **characterized in that**, if the period of transition between the chain K() and the chain K*() is constituted of r consecutive days from the day [TO] to the day [T0+r-1 inclusive, then for each user group G of trust level d for the chain K() and d* for the chain K*(), a function OTAR associated with the group G broadcasts the following information:

before the transition period:

∘ K(t+d) each day [t] with t<T0, in order to give potential access to the service during the sliding time window [t, t+d],

• during the transition period:

∘ K(t+d) each day [t] with T0<=t < T0+r, in order to retain access to the service up to the last day [T0+r-1 of activation of the chain K(),
∘ K*(t+d*) for each day [t] with T0<=t < T0+r, in order to give a valid future access key of the new chain k*(),
∘ d*, if the new trust level d* is different from the old level d,
∘ the date [T0+r] of activation of the new chain K*(),

• after the transition period:

∘ K*(t+d*) for each day [t] with T0+r <=t.

4. The method as claimed in claim 1, **characterized in**

**that** the function f is a cryptographic function or a function based on hashing functions.

5. A system for managing keys making it possible for a user to access one or more given services S in a communication system, the user not being able to be connected continuously to this service, comprising at least the generation of an access key to the service S for a period corresponding to the trust level d allocated to a user or to a user group, and in that it comprises in combination at least one management center suitable for generating keys using the steps of one of claims 1 to 4.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2831365
- US 20050063546 A